Europäisches Patentamt

European Patent Office

Office européen des brevets

(19)

(11) Veröffentlichungsnummer : **0 142 749**
**B1**

(12) **EUROPÄISCHE PATENTSCHRIFT**

(45) Veröffentlichungstag der Patentschrift :
28.06.89

(21) Anmeldenummer : 84113119.6

(22) Anmeldetag : 31.10.84

(51) Int. Cl.⁴ : **B 23 Q   3/157**

(54) Werkzeugwechseleinrichtung für eine Vielspindelwerkzeugmaschine.

(30) Priorität : 14.11.83 DE 3341167

(43) Veröffentlichungstag der Anmeldung :
29.05.85 Patentblatt 85/22

(45) Bekanntmachung des Hinweises auf die Patenterteilung : 28.06.89 Patentblatt 89/26

(84) Benannte Vertragsstaaten :
AT CH FR GB IT LI SE

(56) Entgegenhaltungen :
EP—A— 0 111 046
DE—B— 1 920 275
DE—U— 8 308 601
US—A— 3 646 664
US—A— 4 221 043
US—A— 4 443 928
PATENT ABSTRACTS OF JAPAN, Band 2, Nr. 114 (M-
78), 21. September 1978, Seite 3544 M 78; & JP - A - 53
80875 (KOMATSU SEISAKUSHO K.K.) 17.07.1978

(73) Patentinhaber : **Alfing Kessler Sondermaschinen
GmbH
Postfach 31 20
D-7080 Aalen-Wasseralfingen 1 (DE)**

(72) Erfinder : **Fischer, Peter, Dipl.-Ing.
Max-Eyth-Strasse 3
D-7080 Aalen (DE)**
Erfinder : **Schmolz, Rainer, Dr.-Ing.
Joseph-Haydn-Strasse 19
D-7080 Aalen (DE)**
Erfinder : **Wurstner, Eugen, Ing.grad.
Goethestrasse 5
D-7090 Ellwangen (DE)**

(74) Vertreter : **Füchsle, Klaus, Dipl.-Ing. et al
Hoffmann . Eitle & Partner Patentanwälte Arabellastrasse 4
D-8000 München 81 (DE)**

**Beschreibung**

Die vorliegende Erfindung betrifft eine Werkzeugwechseleinrichtung für eine Werkzeugmaschine mit Spindeleinheit, Antriebselementen und einer Anzahl von Bearbeitungsspindeln, die einen Werkzeugträger zur Aufnahme der zu entnehmenden und der neuen Werkzeuge aufweist, der aus seiner Bestückungsstellung über der Werkzeugmaschine in eine Wechselstellung vor die Bearbeitungsspindeln bewegbar ist.

Werkzeugwechseleinrichtungen für Werkzeugmaschinen mit einer Anzahl von Bearbeitungsspindeln, d. h. solche für sogenannte Vielspindelwerkzeugmaschinen, welche auf einer Seiten- oder Konsoleinheit einer Transfermaschine angeordnet werden, sind bekannt. Sie haben die Aufgabe, einen Satz nebeneinander angeordneter, von getrennten Spindeln angetriebener Werkzeuge (beispielsweise Bohr-, Senk-, Gewindeschneid-, Feinbohr- oder ähnliche Werkzeuge) automatisch gleichzeitig abzunehmen und durch einen anderen neuen Satz zu ersetzen.

Bei bekannten Werkzeugwechseleinrichtungen dieser Art (vgl. DE-B-19 20 275) ist der Werkzeugträger als um seine Längsachse drehbarer Arm ausgebildet, der an seinem einen Ende um eine vertikale, neben der Werkzeugmaschine liegende Achse schwenkbar ist. Der Arm trägt zwei Reihen von Werkzeugaufnahmen, die in bezug auf die Drehachse um 90° zueinander versetzt angeordnet und jeweils zur Aufnahme der zu entnehmenden (ersten Reihe) und der neuen Werkzeuge (zweite Reihe) eingerichtet sind.

Zur Verlagerung des Armes aus der Wechselstellung vor den Bearbeitungsspindeln in die Bestückungsstellung neben der Werkzeugmaschine wird der Arm um die neben der Werkzeugmaschine liegende vertikale Achse um etwa 90° geschwenkt. Da der Arm bei dieser Schwenkbewegung eine relativ große Fläche überstreicht, benötigen derartige bekannte Werkzeugwechseleinrichtungen relativ viel Raum gerade in demjenigen Bereich, in dem aufgrund des Anschlusses der Seiten- bzw. Konsoleinheit an die Mitteneinheit der Transfermaschine beengte Platzverhältnisse vorliegen. Zudem befindet sich der Arm mit den Werkzeugaufnahmen in der Bestückungsstellung neben der Seiten- bzw. Kontrolleinheit relativ nahe an der Mitteneinheit, so daß die Entnehme der ausgewechselten Werkzeuge und die Bestückung mit neuen Werkzeugen in dem Raum zwischen zwei Seiten- bzw. Konsoleinheiten durchgeführt werden muß, wodurch wegen der beengten Platzverhältnisse für die Anordnung der benachbarten Seiten- bzw. Konsoleinheit nicht der nach der DIN-Norm kleinstmögliche Abstand zur benachbarten Seiten- bzw. Konsoleinheit gewählt werden kann. Die Notwendigkeit bei mit derartigen Werkzeugwechseleinrichtungen ausgestatteten Werkzeugmaschinen jeweils größere Abstände zwischen den Seiten- bzw. Konsoleinheiten vorsehen zu müssen, führt zu relativ langen Transfermaschinen und damit zu einer Verteuerung der Bearbeitungsstraße und einer Erhöhung des Raumbedarfes.

Es sind auch bereits Werkzeugwechseleinrichtungen bekannt (vgl. DE-U-83 08 601), bei denen zur Vermeidung der geschilderten Nachteile die Bestückung mit neuen Werkzeugen nicht von der Seite, sondern von unmittelbar auf der Oberseite der Werkzeugmaschine angeordneten Werkzeugmagazinen aus erfolgt. In diesem Bereich ist jedoch der zur Verfügung stehende Raum sehr beschränkt, so daß der für derartige Konstruktionen erforderliche mechanische und steuerungstechnische Aufwand relativ hoch ist.

Aufgabe der vorliegenden Erfindung ist es, eine vollkommen neuartige Werkzeugwechseleinrichtung zu schaffen, die technisch einfach aufgebaut, gut zugänglich und selbst dann eine problemlose Entnahme und Bestückung zuläßt, wenn die Seiten- bzw. Konsoleinheiten in dem nach der DIN-Norm geringstmöglichen Abstand nebeneinander angeordnet sind.

Diese Aufgabe wird erfindungsgemäß dadurch gelöst, daß. die Bestückung in der Bestückungsstellung von einer über der Werkzeugmaschine angeordneten Bedienungsbühne aus erfolgt und · die Bewegungsbahn des Werkzeugträgers von der Bestückungsstellung auf der Bedienungsbühne zur Wechselstellung vor den Bearbeitungsspindeln in einer im wesentlichen vertikal und senkrecht zu den Achsen der Bearbeitungsspindeln verlaufenden Ebene liegt.

Durch die erfindungsgemäßen Merkmale ist erstmalig eine Werkzeugwechseleinrichtung geschaffen, bei der der Werkzeugträger aus seiner Wechselstellung vor den Bearbeitungsspindeln nicht wie bisher seitlich neben die Werkzeugmaschine oder auf deren Oberseite, sondern in eine über der Werkzeugmaschine angeordnete, von einer ebenfalls über der Werkzeugmaschine oder der Transfermaschine verlaufenden Bedienungsbühne her zugängliche Bestückungsstellung geschwenkt wird.

Diese Arbeitsweise hat den Vorteil, daß die Entnahme der ausgewechselten Werkzeuge und die Bestückung mit neuen Werkzeugen nicht wie bisher in dem schmalen Gang zwischen zwei Seiten- oder Konsoleinheiten, oder auf der räumlich eng begrenzten Oberseite der Werkzeugmaschine durchgeführt werden muß, sondern von der über der Werkzeugmaschine angeordneten Bedienungsbühne her erfolgen kann, auf der stets genügend Raum zur Verfügung steht. Auf die Bedienungsbühne können die Werkzeuge in herkömmlicher Weise über Werkzeugwagen oder über automatische Transportsysteme gefördert und von dort manuell oder automatisch in den Werkzeugträger verbracht oder aus diesem entnommen werden. Im Falle einer manuellen Bestückung ist es dabei nicht erforderlich, daß sich die Bedienungsperson in den beengten Raum über oder zwischen den Seiten- und Konsoleinheiten zweier benachbarter Werkzeugmaschinen und damit in den Gefahrenbereich der Werkzeuge und Werkzeugspindeln begibt. Die Bedienungsperson kann daher die Entnahme der ausgewechselten Werkzeuge und die Bestückung mit neuen Werkzeugen in einem Bereich vornehmen, der entfernt von rotierenden Teilen und Werkzeugen und deshalb vollkommen sicher ist.

Die erfindungsgemäße Ausgestaltung ermöglicht ferner eine Konstruktion, bei der im Gegensatz zu bekannten Konstruktionen im Bereich vor, über und neben den Werkzeugen und den Bearbeitungsspindeln in der Bearbeitungsphase der Werkzeugmaschine keinerlei Teile oder Aggregate der Werkzeugwechseleinrichtung liegen. Dies bedeutet, daß der kritische und beengte Raum frei von jeglichen Vorrichtungsteilen bleibt, so daß der Gestaltungsspielraum für den Konstrukteur von Werkzeugmaschinen für Transfermaschinen gegenüber herkömmlichen Lösungen nicht eingeengt ist. Erfindungsgemäß liegt die Bewegungsbahn des Werkzeugträgers von der Bestückungsstellung auf der Bedienungsbühne zur Wechselstellung vor den Bearbeitungsspindeln in einer im wesentlichen vertikal und senkrecht zu den Achsen der Bearbeitungsspindeln verlaufenden Ebene. Daraus ergibt sich eine hinsichtlich des technischen Aufwandes und der für die Bewegung erforderlichen Wege besonders vorteilhafte Konstruktion.

Die Führung des Werkzeugträgers entlang der Bewegungsbahn kann grundsätzlich auf jede beliebige Weise erfolgen. Eine besonders vorteilhafte Ausgestaltung ergibt sich jedoch, wenn als Führung eine Geradführung, vorzugsweise in Form einer Säulenführung oder eine Kurvenführung vorgesehen wird. Eine derartige Gerad- oder Kurvenführung hat eine Vielzahl von Vorteilen und ermöglicht eine technisch einfache und platzsparende Anordnung.

Eine in technischer Hinsicht vorteilhafte Führung wird auch durch eine Anordnung erreicht, bei der der Werkzeugträger über mindestens einen Schwenkarm aus seiner Bestückungsstellung in seine Wechselstellung bewegbar ist. Derartige Schwenkarmführungen sind im Aufbau sehr einfach und ermöglichen darüberhinaus eine präzise Positionierung in der Wechsel- bzw. Bestückungsstellung.

Eine besonders vorteilhafte Schwenkarmausbildung ergibt sich, wenn dieser um eine waagrechte, parallel zu den Achsen der Bearbeitungsspindeln und über diesen angeordnete Achse verschwenkbar ist.

Der Werkzeugträger kann in bekannter Weise als Platte, Rahmen oder dergleichen ausgebildet und mit Aufnahmeöffnungen für die neuen und die auszuwechselnden Werkzeuge ausgestattet sein. Das Lochbild des Werkzeugträgers richtet sich dabei nach dem Spindelbild der Werkzeugmaschine, wobei in bekannter Weise jeweils zwei Reihen für die Werkzeuge vorgesehen sind, wobei die eine Reihe für die neuen und die andere Reihe für die auszuwechselnden Werkzeuge vorgesehen ist.

Gemäß einer vorteilhaften Weiterbildung der Erfindung kann der Werkzeugträger jedoch von dieser bekannten Form abweichen und erfindungsgemäß zwei voneinander getrennte Einheiten umfassen, von denen die eine zur Aufnahme der auszuwechselnden und die andere zur Aufnahme der neuen Werkzeuge eingerichtet ist. Diese Einheiten können ebenfalls jeweils als Platte, Rahmen und dergleichen ausgebildet sein und die Werkzeuge in herkömmlichen Aufnahmeöffnungen tragen. Die Ausbildung in Form von getrennten Einheiten ermöglicht jedoch in konstruktiver Hinsicht vollkommen neue Möglichkeiten. So können die Werkzeugträgereinheiten gemäß einer weiteren vorteilhaften Ausbildung vollkommen unabhängig voneinander bewegt werden. Diese voneinander unabhängige Bewegungsmöglichkeit kann dahingehend ausgenutzt werden, daß die Werkzeugträgereinheiten getrennt voneinander in der Weise geführt werden, daß sie in der Bestückungsstellung nebeneinander liegen. Eine derartige Anordnung ergibt vollkommen neue Möglichkeiten für die Beschickung mit neuen Werkzeugen bzw. für die Entnahme der auszuwechselnden Werkzeuge, und damit einen rationelleren Arbeitsablauf beim Werkzeugwechsel, der bekannterweise nicht nur scharfe gegen stumpfe, sondern auch Werkzeuge einer Bearbeitungsfolge beinhalten kann.

Um zu erreichen, daß die Werkzeugträgereinheiten in der Bestückungsstellung nebeneinander liegen, ist es vorteilhaft, die Bewegungsbahn in Richtung der Bestückungsstellung divergierend auszubilden. Im Falle des Einsatzes einer Säulenführung als Geradführung ist es dabei zweckmäßig, die Säulenführung für die eine Werkzeugträgereinheit auf der einen Seite und die Säulenführung für die andere Werkzeugträgereinheit auf der anderen Seite der Werkzeugmaschine anzuordnen.

Eine besonders stabile und präzise Führung bei technisch einfachem Aufbau wird in einem solchen Falle dann erreicht, wenn jede Säulenführung zwei nebeneinander angeordnete Säulen aufweist, die einen Gleitkopf tragen, an dem die jeweilige Werkzeugträgereinheit nach einer Seite auskragend befestigt ist.

Bei einem bevorzugten Ausführungsbeispiel einer Schwenkarmführung ist der Schwenkarm als Winkelarm mit um 90° zueinander versetzten Armen ausgebildet, an deren freien Enden jeweils eine Werkzeugträgereinheit angeordnet ist. Bei einer derartigen Ausbildung ergibt sich bei geringem Platzbedarf eine sehr günstige Geometrie der Anordnung. Vorteilhaft ist in einem solchen Falle eine Arbeitsweise, bei der der Winkelarm in vier, jeweils um 90° zueinander versetzte Schaltstellungen verschwenkbar ist.

Im folgenden sind zur weiteren Erläuterung und zum besseren Verständnis drei Ausführungsbeispiele der erfindungsgemäßen Werkzeugwechseleinrichtung für eine auf einer Seiten- oder Konsoleinheit einer Transfermaschine angeordnete Werkzeugmaschine unter Bezugnahme auf die beigefügten Zeichnungen näher beschrieben. Es zeigen :

Fig. 1 und 2 schematisch in einer Vorderansicht und einer Seitenansicht ein erstes Ausführungsbeispiel einer erfindungsgemäßen Werkzeugwechseleinrichtung,

Fig. 3 und 4 schematisch in einer Vorderansicht und einer Seitenansicht ein zweites Ausführungsbeispiel einer erfindungsgemäßen Werkzeugwechseleinrichtung, und

Fig. 5 und 6 schematisch in einer Vorderansicht und einer Seitenansicht ein drittes Ausführungsbeispiel einer erfindungsgemäßen Werkzeugwechseleinrichtung.

Wie aus allen Figuren hervorgeht, ist auf der Oberseite einer Seiten- oder Konsoleinheit 1 einer Transfermaschine eine Schlitteneinheit 2 angeordnet, auf deren Schlitten 3 eine Spindeleinheit 4 mit ihren Antriebselementen (nicht dargestellt) befestigt ist.

Die Spindeleinheit 4 ist in den dargestellten Ausführungsbeispielen jeweils mit vier Bearbeitungsspindeln 5 ausgestattet, die über die erfindungsgemäße Werkzeugwechseleinrichtung mit Werkzeugen 6 bestückt werden.

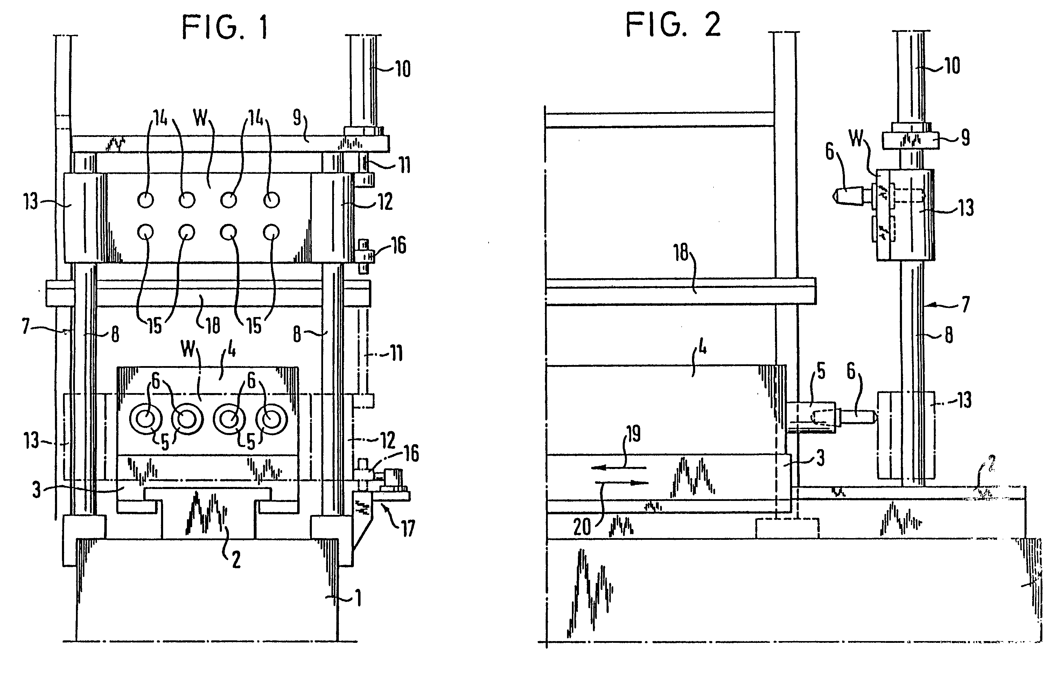

Bei dem in den Figuren 1 und 2 dargestellten Ausführungsbeispiel umfaßt die Werkzeugwechseleinrichtung eine Geradführung, die als Säulenführung 7 ausgebildet ist und zwei Säulen 8 umfaßt. Diese Säulen 8 erstrecken sich in vertikaler Richtung und sind jeweils seitlich der Spindeleinheit 4 auf der Seiteneinheit 1 im Bereich deren an die Mitteneinheit der Transfermaschine anschließenden Endes angeordnet. Die Säulen 8 sind im Bereich ihres oberen Endes mit einer Traverse 9 verbunden, die einen Arbeitszylinder 10 trägt, dessen Kolbenstange 11 mit einem Gleitkopf 12 verbunden ist, der an einer der Säulen 8 verschiebbar gelagert ist. Die gegenüberliegende Säule ist ebenfalls mit einem Gleitkopf 13 ausgestattet, der dem Gleitkopf 12 im wesentlichen entspricht. Zwischen den Gleitköpfen 12 und 13 ist justierbar und austauschbar ein Werkzeugträger W angeordnet, der im vorliegenden Ausführungsbeispiel als Platte ausgebildet ist und Aufnahmeöffnungen 14 und 15 für die Werkzeuge aufweist.

An dem Gleitkopf 12 ist ferner ein justierbarer Anschlag 16 angeordnet, der mit einem Wechselanschlag 17 zusammenwirkt, der neben der Säule 8 auf der Oberseite der Seiten- bzw. Konsoleinheit 1 angeordnet ist.

Die Säulen 8 sind derart bemessen, daß der Werkzeugträger W in seiner angehobenen Lage im Bereich einer Bedienungsbühne 18 zu liegen kommt, die über der Spindeleinheit 4 der Werkzeugmaschine angeordnet ist. Von dieser Bedienungsbühne 18 aus können in bequemer Weise sowohl neue Werkzeuge in den Werkzeugträger W eingesetzt als auch die auszuwechselnden Werkzeuge aus dem Werkzeugträger entnommen werden.

Soll nun ein Werkzeugwechsel durchgeführt werden, so wird der Werkzeugträger W über den Arbeitszylinder 10 aus seiner Bestückungsstellung im Bereich der Bedienungsbühne 18 nach unten vor die Spindeleinheit 4 verfahren. Vor diesem Arbeitsgang sind die Aufnahmeöffnungen 14 bereits mit neuen Werkzeugen von der Bedienungsbühne 18 aus bestückt worden. Ferner ist vor dem Absenken des Werkzeugträgers W die Spindeleinheit 4 in Richtung des Pfeiles 19 (Fig. 2) derart weit zurückgefahren worden, daß die in den Bearbeitungsspindeln 5 befindlichen auszuwechselnden Werkzeuge 6 hinter dem Werkzeugträger W zu liegen kommen.

Aufgrund des Wechselanschlages 17 wird der Werkzeugträger W durch den Arbeitszylinder 10 nur soweit abgesenkt, bis die Achsen der Aufnahmeöffnungen 15 mit den Achsen der Bearbeitungsspindeln 5 der Spindeleinheit 4 fluchten. Ist dies erfolgt, so wird die Spindeleinheit 4 in Richtung des Pfeiles 20 so weit vorgeschoben, bis die auszuwechselnden Werkzeuge 6 in die Aufnahmeöffnungen 15 des Werkzeugträgers W hineinragen und von diesem in herkömmlicher Weise nach dem Lösen aus den Spindeln aufgenommen werden. Im Anschluß daran wird die Spindeleinheit 4 wieder in Richtung des Pfeiles 19 (Fig. 2) zurückgezogen und der Wechselanschlag 17 betätigt, so daß der Werkzeugträger W über den Arbeitszylinder 10 soweit abgesenkt werden kann, bis die in den Aufnahmeöffnungen 14 des Werkzeugträgers ruhenden neuen Werkzeuge 6 vor den Bearbeitungsspindeln 5 der Spindeleinheit 4 zu liegen kommen. Die Spindeleinheit wird dann in Richtung des Pfeiles 20 zur Aufnahme der neuen Werkzeuge vorgeschoben und nach deren Aufnahme wieder in Richtung des Pfeiles 20 zurückgezogen. Bei dieser Zurückziehungsbewegung werden die neuen Werkzeuge durch die Bearbeitungsspindeln aus dem Werkzeugträger W herausgezogen, so daß dieser mit den auszuwechselnden Werkzeugen aus der Wechselstellung wieder in seine Bestückungsstellung im Bereich der Bedienungsbühne 18 angehoben werden kann.

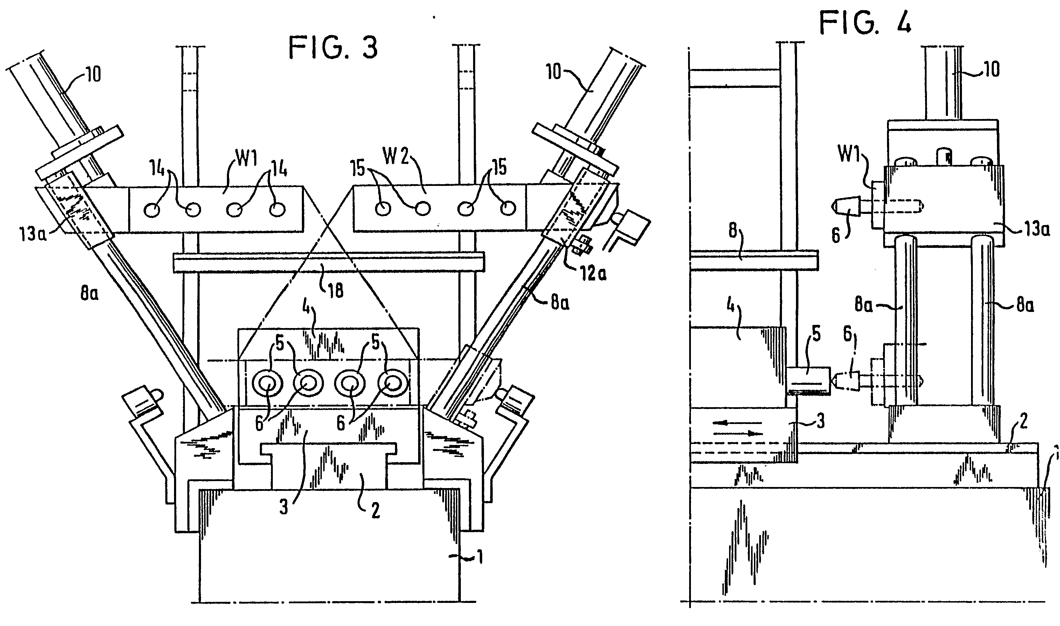

Bei dem in den Figuren 3 und 4 dargestellten Ausführungsbeispiel besteht der Werkzeugträger W aus zwei voneinander getrennten Einheiten W1 und W2, von denen die Werkzeugträgereinheit W1 die Aufnahmeöffnungen 14 für die neuen Werkzeuge und die Werkzeugträgereinheit W2 die Aufnahmeöffnungen 15 für die auszuwechselnden Werkzeuge aufweist.

Die Werkzeugträgereinheiten W1 und W2 sind jeweils mit ihrer einen Seite an Gleitköpfen 12a und 13a justierbar und auswechselbar befestigt. Die Gleitköpfe 12a und 13a sind jeweils an Säulenpaaren 8a hin- und herverfahrbar gelagert, welche im Gegensatz zu dem in den Figuren 1 und 2 dargestellten Ausführungsbeispiel nicht parallel, sondern in einem Winkel zueinander angeordnet sind. Der Winkel der Säulenpaare 8a ist dabei derart gewählt, daß die Werkzeugträgereinheiten W1 bzw. W2 in der Wechselstellung präzise vor den Bearbeitungsspindeln 5 liegen, in der Bestückungsstellung jedoch — wie Figur 3 zeigt — nebeneinander zu liegen kommen.

Wie aus Figur 3 hervorgeht, ist jede der Werkzeugträgereinheiten W1 bzw. W2 über einen eigenen Arbeitszylinder 10 am jeweiligen Säulenpaar 8a verschiebbar. Auf diese Weise können die Werkzeugträgereinheiten W1 und W2 vollkommen unabhängig voneinander zwischen ihrer Wechselstellung und ihrer Bestückungsstellung verfahren werden.

Sollen nun nach Ende der Standzeit die in den Bearbeitungsspindeln 5 befindlichen Werkzeuge ausgewechselt werden, so wird nach einem Zurückziehen der Schlitteneinheit 4 die Werkzeugträgereinheit W2 über den Arbeitszylinder 10 in ihre Wechselstellung vor den Bearbeitungsspindeln 5 verschoben. Im Anschluß daran erfolgt — wie oben bereits beschrieben — die Übergabe der auszuwechselnden Werkzeuge an die Werkzeugträgereinheit W2, die dann in ihre Bestückungsstellung im Bereich der Bedienungsbühne 18 hochgefahren wird. Ist dies abgeschlossen, wird die Werkzeugträgereinheit W1, die bereits vorher mit neuen Werkzeugen bestückt wurde, aus ihrer in Figur 3 dargestellten Bestückungsstellung in ihre Wechselstellung vor den Bearbeitungsspindeln 5 abgesenkt. Im Anschluß daran erfolgt in der oben ebenfalls bereits beschriebenen Weise die Übergabe der neuen Werkzeuge an die Bearbeitungsspindeln 5 der Spindeleinheit 4.

Sobald diese Übergabe erfolgt ist, kann die Werkzeugträgereinheit W1 über den zugeordneten Arbeitszylinder 10 wieder aus ihrer Wechselstellung in die in Figur 3 gezeigte Bestückungsstellung im Bereich der Bedienungsbühne 18 hochgefahren werden.

Auch bei diesem Ausführungsbeispiel wird die Lage der Werkzeugträgereinheiten W1 bzw. W2 durch verstellbare Anschläge und Gegenanschläge festgelegt, die jedoch bekannter Ausbildung sind und deshalb nicht besonders beschrieben werden.

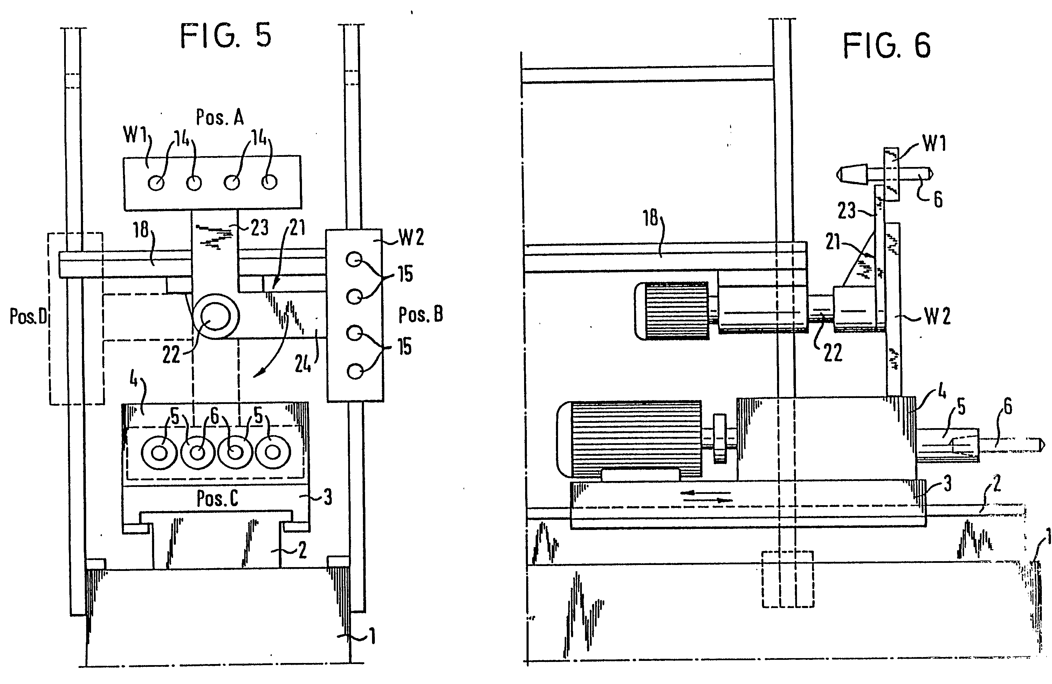

Bei dem in den Figuren 5 und 6 dargestellten Ausführungsbeispiel besteht der Werkzeugträger ebenfalls aus zwei voneinander getrennten Einheiten W1 und W2, wobei die Werkzeugträgereinheit W1 die Aufnahmeöffnungen 14 für die neuen und die Werkzeugträgereinheit W2 die Aufnahmeöffnungen 15 für die auszuwechselnden Werkzeuge trägt.

Im Gegensatz zu dem im vorangegenen beschriebenen Ausführungsbeispiel erfolgt die Führung der voneinander getrennten Werkzeugträgereinheiten jedoch über einen Schwenkarm 21, der um eine waagerechte, parallel zu den Achsen der Bearbeitungsspindeln 5 und über diesen angeordnete Achse 22 verschwenkbar ist.

Der Schwenkarm 21 ist im vorliegenden Ausführungsbeispiel als Winkelarm mit zwei um jeweils 90° zueinander versetzten Armen 23 und 24 ausgebildet, an deren freien Enden die Werkzeugträgereinheiten W1 bzw. W2 befestigt sind.

Während des Bearbeitungsvorganges befindet sich der Schwenkarm 21 mit den Werkzeugträgereinheiten W1 und W2 in der in Figur 5 dargestellten Stellung. Während dieser Zeit wird die Werkzeugträgereinheit W1 in üblicher Weise mit neuen Werkzeugen bestückt, während die Aufnahmeöffnungen 15 der Werkzeugträgereinheit W2 leer sind.

Soll nun ein Werkzeugwechsel vorgenommen werden, so wird die Spindeleinheit 4 in der oben beschriebenen Weise zurückgezogen und der Schwenkarm 21 um 90° im Uhrzeigersinn geschwenkt. Bei dieser Schwenkbewegung gelangt die Werkzeugträgereinheit W2 mit den leeren Aufnahmeöffnungen 15 vor die Bearbeitungsspindeln 5, so daß diese in der oben beschriebenen Weise die auszuwechselnden Werkzeuge an die Werkzeugträgereinheit W2 abgegen können.

Ist dieser Übergabevorgang abgeschlossen, so wird die Spindeleinheit erneut zurückgezogen und der Schwenkarm 21 um weitere 90° im Uhrzeigersinn geschwenkt. Dadurch gelangt die mit den neuen Werkzeugen bestückte Werkzeugträgereinheit W1 vor die nunmehr leeren Bearbeitungsspindeln, so daß der Übergabevorgang der neuen Werkzeuge an die Bearbeitungsspindeln in der oben beschriebenen Weise durch erneutes Vorschieben und Zurückziehen der Spindeleinheit 4 erfolgen kann. Ist auch dieser Übergabevorgang abgeschlossen, so wird der Schwenkarm 21 erneut um 90° im Uhrzeigersinn verschwenkt, wodurch die vor den Bearbeitungsspindeln liegende Werkzeugträgereinheit W1 in die in Figur 5 mit Position D bezeichnete Schaltstellung verschwenkt wird. In dieser Schaltstellung liegt die mit den auszuwechselnden Werkzeugen bestückte Werkzeugträgereinheit W2 in der in Figur 5 mit Position A bezeichneten Schaltstellung, in der die auszuwechselnden Werkzeuge in bequemer Weise über die Bedienungsbühne 18 entnommen werden können. In dieser Phase kann die Spindeleinheit 4 bereits einen neuen Arbeitsvorgang durchführen.

Sind die auszuwechselnden Werkzeuge aus der Werkzeugträgereinheit W2 in der Schaltstellung gemäß Position A entnommen, so wird der Schwenkarm 21 wiederum um 90° im Uhrzeigersinn verschwenkt. Dadurch gelangt die nunmehr leere Werkzeugträgereinheit W2 in die in Figur 5 mit position B bezeichnete Schaltstellung und ist für den nächsten Entnahmevorgang bereit. Die leere Werkzeugträgereinheit W1 wiederum befindet sich in dieser Schaltstellung in Position A, in der sie von der Bedienungsbühne 18 aus mit neuen Werkzeugen bestückt werden kann.

Der Antrieb des Schwenkarmes 21 kann mit herkömmlichen Mitteln sowohl auf elektrische oder hydraulische Weise erfolgen, so daß eine genaue Beschreibung der hierfür erforderlichen Getriebeteile und Positioniereinrichtungen entbehrlich ist.

**Patentansprüche**

1. Werkzeugwechseleinrichtung für eine Werkzeugmaschine mit Spindeleinheit (4), Antriebselementen und einer Anzahl von Bearbeitungsspindeln (5), die einen Werkzeugträger (W, W1, W2) zur Aufnahme der zu entnehmenden und der neuen Werkzeuge aufweist, der aus seiner Bestückungsstellung über der Werkzeugmaschine in eine Wechselstellung vor die Bearbeitungsspin-

deln (5) bewegbar ist, dadurch gekennzeichnet, daß die Bestückung in der Bestückungsstellung von einer über der Werkzeugmaschine angeordneten Bedienungsbühne (18) aus erfolgt und die Bewegungsbahn des Werkzeugträgers (W, W1, W2) von der Bestückungsstellung auf der Bedienungsbühne (18) zur Wechselstellung vor den Bearbeitungsspindeln (5) in einer im wesentlichen vertikal und senkrecht zu den Achsen der Bearbeitungsspindeln verlaufenden Ebene liegt.

2. Werkzeugwechseleinrichtung nach Anspruch 1, dadurch gekennzeichnet, daß der Werkzeugträger (W, W1, W2) an einer Geradführung aus seiner Bestückungsstellung in seine Wechselstellung bewegbar ist.

3. Werkzeugwechseleinrichtung nach Anspruch 1, dadurch gekennzeichnet, daß der Werkzeugträger (W, W1, W2) an einer Kurvenführung aus seiner Bestückungsstellung in seine Wechselstellung bewegbar ist.

4. Werkzeugwechseleinrichtung nach Anspruch 1, dadurch gekennzeichnet, daß der Werkzeugträger (W1, W2) über mindestens einen Schwenkarm (21) aus seiner Bestückungsstellung in seine Wechselstellung bewegbar ist.

5. Werkzeugwechseleinrichtung nach Anspruch 4, dadurch gekennzeichnet, daß der Schwenkarm (21) um eine waagrechte, parallel zu den Achsen der Bearbeitungsspindeln (5) und über diesen angeordnete Achse (22) verschwenkbar ist.

6. Werkzeugwechseleinrichtung nach einem der Ansprüche 1 bis 5, dadurch gekennzeichnet, daß der Werkzeugträger (W) zwei voneinander getrennte Einheiten (W1, W2) umfaßt, von denen die eine (W2) zur Aufnahme der auszuwechselnden und die andere (W1) zur Aufnahme der neuen Werkzeuge (6) eingerichtet ist.

7. Werkzeugwechseleinrichtung nach Anspruch 6, dadurch gekennzeichnet, daß die Werkzeugträgereinheiten (W1, W2) jeweils als Platte, Rahmen oder dergleichen ausgebildet und mit Aufnahmeöffnungen (14, 15) für die Werkzeuge (6) ausgestattet sind.

8. Werkzeugwechseleinrichtung nach Anspruch 6 oder 7, dadurch gekennzeichnet, daß die Werkzeugträgereinheiten (W1, W2) gemeinsam miteinander bewegbar sind.

9. Werkzeugwechseleinrichtung nach Anspruch 6 oder 7, dadurch gekennzeichnet, daß die Werkzeugträgereinheiten (W1, W2) unabhängig voneinander bewegbar sind.

10. Werkzeugwechseleinrichtung nach Anspruch 2 oder 3 sowie 6 und 9, dadurch gekennzeichnet, daß die Werkzeugträgereinheiten (W1, W2) derart geführt sind, daß sie in der Bestückungsstellung nebeneinander liegen.

11. Werkzeugwechseleinrichtung nach Anspruch 10, mit einer Geradführung, dadurch gekennzeichnet, daß die Bewegungsbahnen der zwei getrennten Werkzeugträgereinheiten (W1, W2) von der Wechselstellung zur Beschickungsstellung divergieren.

12. Werkzeugwechseleinrichtung nach Anspruch 11, dadurch gekennzeichnet, daß die Geradführung der einen Werkzeugträgereinheit (W1) auf der einen Seite und die Geradführung der andere Werkzeugträgereinheit (W2) auf der andere Seite der Werkzeugmaschine angeordnet ist.

13. Werkzeugwechseleinrichtung nach Anspruch 12, dadurch gekennzeichnet, daß jede Geradführung zwei nebeneinander angeordnete Säulen (8a) aufweist, die einen Gleitkopf (12a, 13a) tragen, an dem die Werkzeugträgereinheit (W1, W2) nach einer Seite auskragend befestigt ist.

14. Werkzeugwechseleinrichtung nach Anspruch 4, 5, 6 oder 8, dadurch gekennzeichnet, daß der Schwenkarm (21) als Winkelarm mit zwei um 90° zueinander versetzten Armen (23, 24) ausgebildet ist, an deren freiem Ende jeweils eine Werkzeugträgereinheit (W1, W2) angeordnet ist.

15. Werkzeugwechseleinrichtung nach Anspruch 14, dadurch gekennzeichnet, daß der Winkelarm in vier, jeweils 90° zueinander versetzte Schaltstellungen verschwenkbar ist.

**Claims**

1. Tool exchange device for a machine tool with spindle unit (4), drive elements and a number of processing spindles (5), which comprises a tool holder (W, W1, W2) for holding the tools to be removed and the new tools, which can be moved out of its loading position above the machine tool into an exchange position in front of the processing spindles (5), characterised in that loading in the loading position is carried out from an operating platform (18) disposed above the machine tool and the path of travel of the tool holder (W, W1, W2) from the loading position on the operating platform (18) to the exchange position in front of the processing spindles (5) lies in a plane extending essentially vertically and perpendicularly to the axes of the processing spindles.

2. Tool exchange device according to claim 1, characterised in that the tool holder (W, W1, W2) can be moved out of its loading position into its exchange position on a rectilinear guide.

3. Tool exchange device according to claim 1, characterised in that the tool holder (W, W1, W2) can be moved out of its loading position into its exchange position on a curved guide.

4. Tool exchange device according to claim 1, characterised in that the tool holder (W1, W2) can be moved out of its loading position into its exchange position by at least one pivot arm (21).

5. Tool exchange device according to claim 4, characterised in that the pivot arm (21) is pivotable about a horizontal axis (22) arranged parallel to the axes of the processing spindles (5) and above the latter.

6. Tool exchange device according to any of claims 1 to 5, characterised in that the tool holder (W) comprises two separate units (W1, W2) one of which (W2) is designed to hold the tools to be exchanged (6) and the other (W1) to hold the new tools (6).

7. Tool exchange device according to claim 6, characterised in that the tool holder units (W1, W2) are designed in each case as a plate, frame or the like and equipped with holding openings (14, 15) for the tools (6).

8. Tool exchange device according to claim 6 or 7, characterised in that the tool holder units (W1, W2) can be moved jointly with each other.

9. Tool exchange device according to claim 6 or 7, characterised in that the tool holder units (W1, W2) can be moved independently of each other.

10. Tool exchange device according to claim 2 or 3 as well as 6 and 9, characterised in that the tool holder units (W1, W2) are guided in such a way that they are located adjacent to each other in the loading position.

11. Tool exchange device according to claim 10, with a rectilinear guide, characterised in that the paths of travel of the two separate tool holder units (W1, W2) diverge from the exchange position to the loading position.

12. Tool exchange device according to claim 11, characterised in that the rectilinear guide of one tool holder unit (W1) is disposed on one side and the rectilinear guide of the other tool holder unit (W2) on the other side of the machine tool.

13. Tool exchange device according to claim 12, characterised in that each rectilinear guide comprises two adjacent columns (8a) which carry a sliding head (12a, 13a) on which the tool holder unit (W1, W2) is mounted, projecting to one side.

14. Tool exchange device according to claim 4, 5, 6 or 8, characterised in that the pivot arm (21) is designed as an angle arm with two arms (23, 24) which are offset from each other by 90° and on the free ends of which are mounted in each case a tool holder unit (W1, W2).

15. Tool exchange device according to claim 14, characterised in that the angle arm is pivotable into four indexing positions offset from each other by 90°.

**Revendications**

1. Dispositif de changement d'outils pour une machine-outil comprenant une unité-broches (4), des éléments d'entraînement et plusieurs broches d'usinage (5), ce dispositif comportant un mandrin (W, W1, W2) qui, destiné à recevoir les outils à enlever et les nouveaux outils, peut se déplacer de sa position de chargement située au-dessus de la machine à une position de changement située devant les broches d'usinage (5), caractérisé par le fait que le remplacement des outils à la position de chargement s'effectue à partir d'une plateforme de service (18) placée au-dessus de la machine-outil et que la trajectoire du mandrin (W, W1, W2) depuis la position de chargement sur la plateforme de service (18) jusqu'à la position de changement devant les broches d'usinage (5) se situe dans un plan disposé sensiblement verticalement et perpendiculairement aux axes des broches d'usinage.

2. Dispositif de changement d'outils selon la revendication 1, caractérisé par le fait que le mandrin (W, W1, W2) peut être amené de sa position de chargement à sa position de changement en suivant un guidage droit.

3. Dispositif de changement d'outils selon la revendication 1, caractérisé par le fait que le mandrin (W, W1, W2) peut être amené de sa position de chargement à sa position de changement en suivant un guidage courbe.

4. Dispositif de changement d'outils selon la revendication 1, caractérisé par le fait que le mandrin (W1, W2) peut être amené de sa position de chargement à sa position de changement par au moins un bras pivotant (21).

5. Dispositif de changement d'outils selon la revendication 4, caractérisé par le fait que le bras pivotant (21) peut pivoter autour d'un axe horizontal (22) disposé parallèlement aux axes des broches d'usinage (5) et au-dessus de celles-ci.

6. Dispositif de changement d'outils selon l'une des revendications 1 à 5, caractérisé par le fait que le mandrin (W) comprend deux unités (W1, W2) séparées l'une de l'autre et dont l'une (W2) est conçue pour recevoir les outils à remplacer et l'autre (W1) pour recevoir les nouveaux outils (6).

7. Dispositif de changement d'outils selon la revendication 6, caractérisé par le fait que les unités (W1, W2) du mandrin sont respectivement réalisées en forme de plaque, de cadre ou analogue et sont équipées de logements (14, 15) destinés à recevoir les outils (6).

8. Dispositif de changement d'outils selon la revendication 6 ou 7, caractérisé par le fait que les unités (W1, W2) du mandrin peuvent être déplacées ensemble.

9. Dispositif de changement d'outils selon la revendication 6 ou 7, caractérisé par le fait que les unités (W1, W2) du mandrin peuvent être déplacées indépendamment l'une de l'autre.

10. Dispositif de changement d'outils selon la revendication 2 ou 3 ainsi que 6 et 9, caractérisé par le fait que les unités (W1, W2) du mandrin sont guidées de façon à se trouver l'une à côté de l'autre à la position de chargement.

11. Dispositif de changement d'outils selon la revendication 10 comprenant un guidage droit, caractérisé par le fait que les trajectoires des deux unités séparées (W1, W2) du mandrin divergent dans le sens allant de la position de changement à la position de chargement.

12. Dispositif de changement d'outils selon la revendication 11, caractérisé par le fait que le guidage droit d'une unité (W1) du mandrin est placé d'un côté et le guidage droit de l'autre unité (W2) de l'autre côté de la machine-outil.

13. Dispositif de changement d'outils selon la revendication 12, caractérisé par le fait que chaque guidage droit comporte deux colonnes (8a) qui, placées l'une à côté de l'autre, portent une tête coulissante (12a, 13a) sur laquelle l'unité (W1, W2) du mandrin est fixée en porte à faux d'un côté.

14. Dispositif de changement d'outils selon les revendications 4, 5, 6 ou 8, caractérisé par le fait que le bras pivotant (21) est réalisé sous la forme d'un coude comportant deux bras (23, 24) décalés de 90° l'un par rapport à l'autre et sur les extrémités libres desquels est respectivement montée une unité (W1, W2) du mandrin.

15. Dispositif de changement d'outils selon la revendication 14, caractérisé par le fait que le coude peut pivoter dans quatre positions respectivement décalées de 90° les unes par rapport aux autres.

FIG. 1

FIG. 2

FIG. 4

FIG. 3

FIG. 5

FIG. 6

EP 0 142 749 B1